# EUROPÄISCHE PATENTSCHRIFT

(11) **EP 0 652 065 B1**
(45) Veröffentlichungstag und Bekanntmachung des Hinweises auf die Patenterteilung: **26.03.1997**
(21) Anmeldenummer: 94113983.4
(22) Anmeldetag: 07.09.1994
(51) Int. Cl.: B23D 19/06, B21C 37/02

(54) **Verfahren zum Herstellen geschweisster Stahlblechplatinen**
Process for manufacturing welded steel plate panels
Procédé pour la fabrication de panneaux de tôles d'acier soudés

(30) Priorität: 07.10.1993 DE 4334199
(43) Veröffentlichungstag der Anmeldung: 10.05.1995
(73) Patentinhaber: Hoesch Platinen GmbH, 44145 Dortmund (DE)
(72) Erfinder: Tenhaven, Ulrich, Dr.-Ing., D-44229 Dortmund (DE)
(74) Vertreter: Husmann, Johannes, Dipl.-Ing.

(56) Entgegenhaltungen:
- EP-A- 0 313 544
- DE-C- 4 235 110

## Beschreibung

Die Erfindung betrifft ein verfahren zum Herstellen geschweißter Stahlblechplatinen nach dem Oberbegriff des Anspruchs 1.

In der DE-Patentschrift 42 35 110 wird dargelegt, wie derartige Stahlblechplatinen, die z.B. für die Herstellung von Preß- und/oder Abkantteilen, die als Karosserieteile dienen, verwendet werden, da diese Teile in ihrem Verlauf unterschiedlichen Belastungen ausgesetzt sind, vorteilhaft hergestellt werden können.

Danach werden für die Herstellung geschweißter Stahlblechplatinen zunächst einzelne für die Platinenteile geeignete Blechtafeln in einer Länge von Stahlbändern abgetrennt, die bis zu 30-fach größer ist als die Länge der einzelnen Stahlblechplatine. Anschließend werden die Blechtafeln an den Kanten z.B. mit einer Tafelschere beschnitten, so daß die Abweichungen von der Geradneit der Blechkanten beseitigt werden. Die so vorbereiteten Blechtafeln werden nun einer Schweißmaschine zugeführt und an den langen Kanten miteinander verschweißt. In einer weiteren Bearbeitungsstufe werden die Verbundtafeln einer Stanzpresse zugeführt. In dieser Bearbeitungsstufe werden aus den Verbundtafeln durch geeignete Schnittwerkzeuge die Platinen mit der gewünschten Form herausgetrennt.

Das vorstehend beschriebene verfahren hat den Vorteil, daß zur Einhaltung enger Spalttoleranzen beim Stumpfstoß-Schweißen mit einem Laser- oder Elektronenstrahl und zur Einhaltung enger Überlappungstoleranzen beim Quetschnahtschweißen die Blechtafeln vor dem Schweißen beispielsweise mit einer Tafelschere beschnitten werden können.

Dieses Verfahren bietet im Bereich der üblichen Maschinengröße von Tafelscheren, also bis zu einer Schnittlänge von etwa 4000 mm die beschriebenen Vorteile. Will man jedoch deutlich längere Blechtafeln an den Längskanten miteinander verschweißen, würden die Aufwendungen für die Herstellung maßhaltiger Messer und die Justierung solcher Messer zur Herstellung gerader Blechkanten mit möglichst gratarmer Kantenausbildung überproportional steigen und die Beherrschung dieses Verfahrensschrittes schwierig werden.

Von daher ist es Aufgabe der vorliegenden Erfindung, ein Verfahren der eingangs genannten Art zu schaffen, das auf einfache Weise ermöglicht, auch deutlich längere Blechtafeln als 4000 mm mit geraden Längskanten herstellen zu können.

Diese Aufgabe wird durch die im Anspruch 1 angegebene Erfindung gelöst.

Vorteilhafte Ausbildungen bzw. Weiterbildungen des erfindungsgemäßen Verfahrens sind in den Ansprüchen 2 und 3 angegeben.

Vorteilhaft werden durch dieses erfindungsgemäße Verfahren auch bei Abweichung von der Geradheit parallele Blechkanten erzielt, wenn durch geeignete Führung der Bleche in der Vorrichtung sichergestellt ist, daß die Längskanten der Blechtafeln vor dem Schneidvorgang aneinander liegen.

Ein wesentlicher weiterer Vorteil des Verfahrens ergibt sich daraus, daß jede beliebige Blechtafellänge beschnitten werden kann, so daß die Blechtafellänge jeweils optimal an die Platinenlange wie auch an die Transport- und Lagermöglichkeiten angepaßt werden kann.

Anhand der schematischen Zeichnungen wird das erfindungsgemäße Verfahren im folgenden näher erläutert:

Es zeigen:
- Fig. 1: eine Möglichkeit der Verfahrensweise, dargestellt im Schnitt durch die Blechtafeln,
- Fig. 2: die Möglichkeit nach Fig. 1 in perspektivischer Draufsicht,
- Fig. 3: eine andere Möglichkeit der Verfahrensweise, dargestellt im Schnitt durch die Blechtafeln,
- Fig. 4: eine weitere Möglichkeit der Verfahrensweise, dargestellt im Schnitt durch die Blechtafeln.

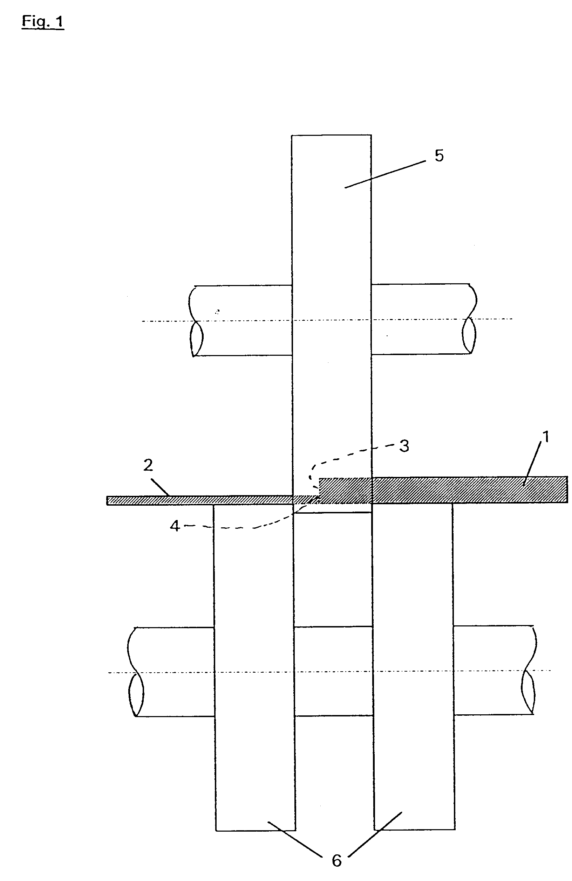

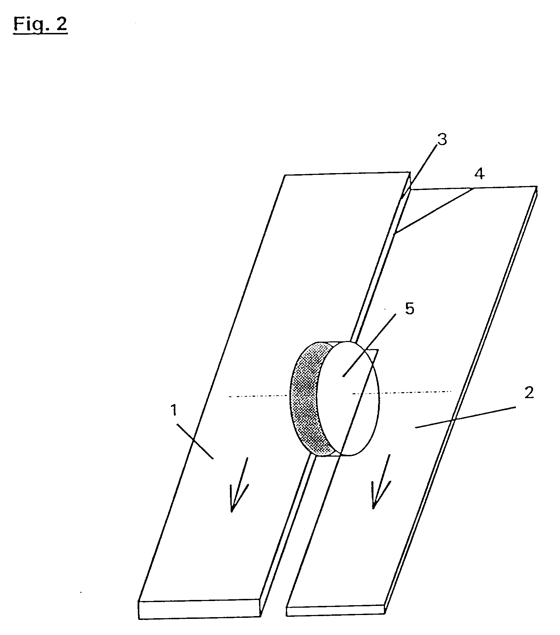

Wie aus den Figuren 1 und 2 hervorgeht, werden die von geeigneten Stahlbändern in einer vielfachen, z.B. 30-fachen Länge der fertigen Schweißplatinen abgetrennten Blechtafeln 1, 2 paarweise mit sich berührend aneinander liegenden Längskanten 3, 4 dergestalt durch eine nicht dargestellte Vorrichtung mit einem rotierenden Zirkularmesser, bestehend aus Obermesser 5 und Untermesser 6, geführt, daß das Zirkularmesser von beiden Blechtafeln 1, 2 einen Blechstreifen über die gesamte Länge abschneidet.

Der Abstand zwischen je zwei benachbarten Punkten der beschnittenen und zu verschweißenden Längskanten 3, 4 entspricht dann immer genau der Dicke des Obermessers 5 bzw. dem Abstand der Untermesser 6 des Zirkularmessers.

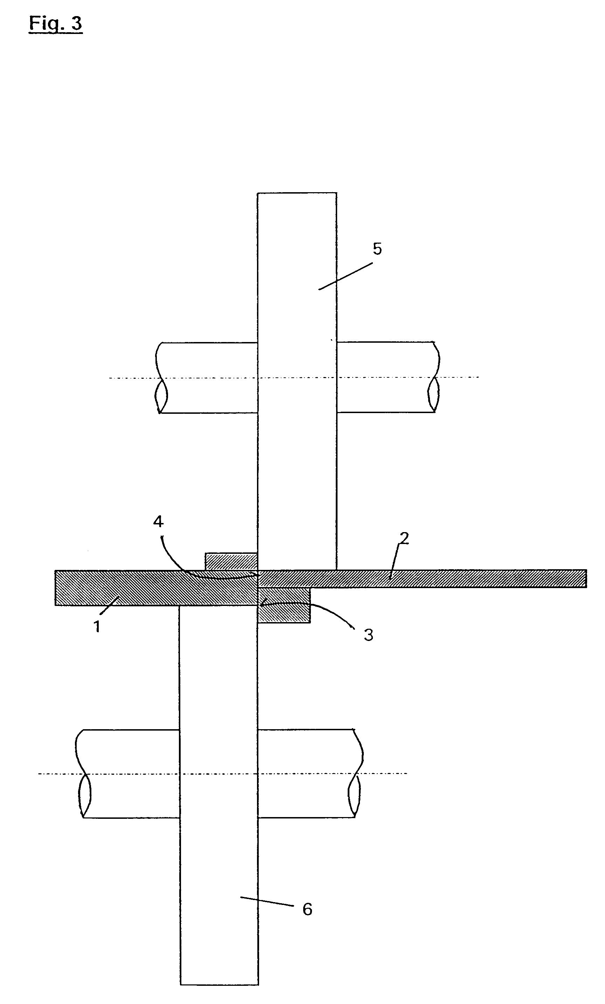

Die Figur 3 zeigt die Variante des erfindungsgemäßen Verfahrens, die darin besteht, daß die Blechtafeln 1, 2 mit überlappten Längskanten 3, 4 so durch eine Vorrichtung mit einem rotierenden Zirkularmesser mit Obermesser 5 und Untermesser 6 geführt werden, daß das Zirkularmesser mit einem Schnitt von den übereinanderliegenden Blechtafeln 1, 2 je einen Blechstreifen über die gesamte Tafellange abschneidet.

Hierdurch wird ebenfalls erreicht, daß die beschnittenen Längskanten 3, 4 eine hohe Parallelität aufweisen.

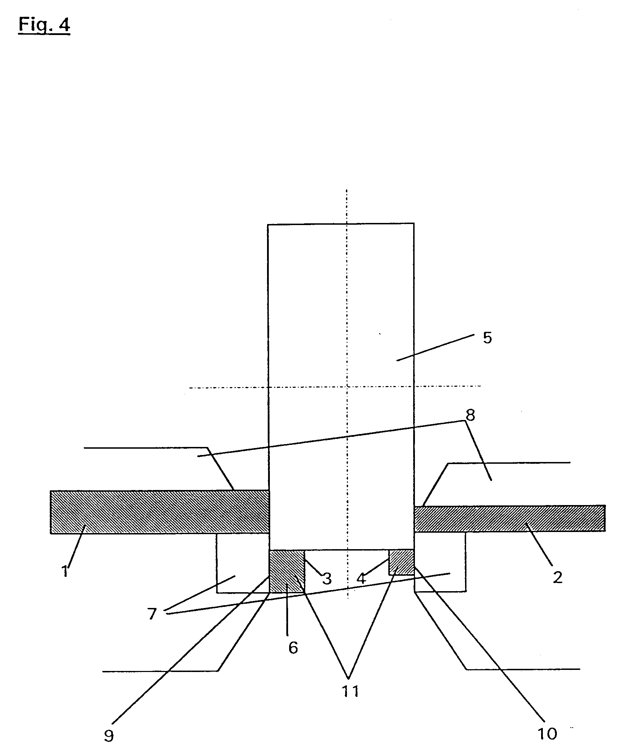

In Figur 4 ist eine weitere Variante des erfindungsgemäßen Verfahrens dargestellt, die dadurch gekennzeichnet ist, daß die Blechtafeln 1, 2 mit den zu verschweißenden Längskanten 3, 4 zueinander auf parallel fest montierten linearen Untermessern 7 mit geeigneten Blechniederhaltevorrichtungen 8 so festgespannt werden, daß die Längskanten 3, 4 einige Millimeter über die Kanten 9, 10 der Untermesser 7 stehen.

Anschließend taucht ein Zirkular-Obermesser 5, dessen Dicke dem Abstand der linearen Untermesser 7 entspricht, zwischen die Untermesser 7 ein und wird rollend entlang der Untermesser 7 geführt, so daß von beiden Längskanten 3, 4 ein Streifen 11 in der Breite des Blechüberstandes abgetrennt wird.

## Patentansprüche

1. Verfahren zum Herstellen geschweißter Stahlblechplatinen aus einzelnen von für die Platinenteile geeigneten Stahlbändern abgetrennten Blechtafeln (1, 2), wobei Blechtafeln (1, 2) der mehrfachen Länge der Stahlblechplatinen von den Stahlbändern abgeteilt, in ihren Längskanten (3, 4), die vorher beschnitten werden, miteinander verschweißt und anschließend die einzelnen Stahlblechplatinen aus den aus den Blechtafeln (1, 2) entstandenen Verbundtafeln herausgetrennt werden, dadurch gekennzeichnet, daß die paarweise zueinander ausgerichteten Längskanten (3, 4) zweier Blechtafeln (1, 2) über 4.000 mm Länge gemeinsam kontinuierlich über die gesamte Länge beschnitten werden.

2. Verfahren nach Anspruch 1, dadurch gekennzeichnet, daß sich die Längskanten (3, 4) der paarweise zueinander ausgerichteten Blechtafeln (1, 2) auf Stoß berühren.

3. Verfahren nach Anspruch 1, dadurch gekennzeichnet, daß die Blechtafeln (1, 2) mit sich überlappenden berührenden Längskanten (3, 4) paarweise beschnitten werden.

## Claims

1. Method for the purpose of producing welded sheet steel plates from individual metal sheets (1, 2) which are separated from steel bands which are suitable for the plate parts, wherein metal sheets (1, 2) many times the length of sheet steel plates are divided from the steel bands, welded together at their longitudinal edges (3, 4), which beforehand are cut, and subsequently the individual sheet steel plates are separated from the composite sheets which have been produced from the metal sheets (1, 2), characterised in that the longitudinal edges (3, 4) of two metal sheets (1, 2) over 4000mm in length, which are aligned to each other in pairs, are cut together in a continuous manner over the total length.

2. Method according to claim 1, characterised in that the longitudinal edges (3, 4) of the metal sheets (1, 2), which are aligned to each other in pairs, have edge to edge contact with each other.

3. Method according to claim 1, characterised in that the metal sheets (1, 2) having longitudinal edges (3, 4) which overlap each other and are in contact with each other, are cut into pairs.

## Revendications

1. Procédé de fabrication de flans en tôle d'acier soudés à partir de plaques de tôle (1, 2) séparées, découpées hors de feuillards d'acier convenant pour les éléments de flan, dans lequel des plaques de tôle (1, 2) d'une longueur multiple de celle des flans en tôle d'acier sont découpées dans les feuillards d'acier, sont soudées ensemble le long de leurs bords longitudinaux (3, 4) qui ont été préalablement découpés, et les flans individuels en tôle d'acier sont ensuite découpés hors des plaques composites formées à partir des plaques de tôle (1, 2), caractérisé en ce que les bords longitudinaux (3, 4) alignés ensemble par paire, de deux plaques de tôle (1, 2) d'une longueur supérieure à 4000 mm, sont découpés ensemble et en continu sur toute la longueur.

2. Procédé selon la revendication 1, caractérisé en ce que les bords longitudinaux (3, 4) des plaques de tôle (1, 2) alignées ensemble par paire sont en contact bout-à-bout.

3. Procédé selon la revendication 1, caractérisé en ce que les plaques de tôle (1, 2) sont découpées par paire avec leurs bords longitudinaux (3, 4) en contact avec chevauchement.
